# EUROPÄISCHE PATENTANMELDUNG

(11) **EP 2 450 229 A2**
(43) Veröffentlichungstag der Anmeldung: **09.05.2012**
(21) Anmeldenummer: 11187684.3
(22) Anmeldetag: 03.11.2011
(51) Int. Cl.: B60N 2/44, H01H 13/00

(54) **Sitzbelegungsschalter und Fahrzeugsitz**

(30) Priorität: 04.11.2010 DE 102010043417
(71) Anmelder: Mayser GmbH & Co. KG, 89073 Ulm (DE)
(72) Erfinder: Freiermuth, Thomas, 89075 Ulm (DE); Scherraus, Marc, 89075 Ulm (DE); Wiest, Thomas, 88416 Ochsenhausen (DE)
(74) Vertreter: Patentanwälte Ruff, Wilhelm, Beier, Dauster & Partner

(57) **Zusammenfassung**

1. Sitzbelegungsschalter und Fahrzeugsitz mit wenigstens einem Sitzbelegungsschalter.
2. Die Erfindung betrifft einen Sitzbelegungsschalter mit einem Gehäuse und wenigstens einer in dem Gehäuse angeordneten elektrischen Schaltvorrichtung, wobei an dem Gehäuse ein relativ zu dem Gehäuse bewegliches Betätigungselement für die Schaltvorrichtung angeordnet ist, bei dem die Schaltvorrichtung einen Schaltungsträger mit Schaltkontakten und eine auf dem Schaltungsträger aufliegende Federscheibe aufweist.

## Beschreibung

Die Erfindung betrifft einen Sitzbelegungsschalter mit einem Gehäuse und wenigstens einer in dem Gehäuse angeordneten elektrischen Schaltvorrichtung, wobei an dem Gehäuse ein relativ zum Gehäuse bewegliches Betätigungselement für die Schaltvorrichtung angeordnet ist. Die Erfindung betrifft auch einen Fahrzeugsitz mit einem Sitzbelegungsschalter.

Sitzbelegungsschalter werden in modernen Kraftfahrzeugen verwendet, um in Abhängigkeit einer Belegung des Sitzes beispielsweise eine Warnlampe bei Nichtbenutzung des Sicherheitsgurts zu steuern oder auch um die Auslösung eines Airbags zu steuern. Problematisch bei Sitzbelegungsschaltern sind Fehlauslösungen, beispielsweise wenn lediglich eine Handtasche auf dem Beifahrersitz steht, sowie weiter Probleme, die sich bei dem eventuellen Einschäumen der Schalter in ein Sitzkissen ergeben.

Mit der Erfindung soll ein verbesserter Sitzbelegungsschalter und ein verbesserter Fahrzeugsitz mit wenigstens einem Sitzbelegungsschalter bereitgestellt werden

Das der Erfindung zugrundeliegende Problem wird durch einen Sitzbelegungsschalter mit einem Gehäuse und wenigstens einer in dem Gehäuse angeordneten elektrischen Schaltvorrichtung gelöst, wobei an dem Gehäuse ein relativ zum Gehäuse bewegliches Betätigungselement für die Schaltvorrichtung angeordnet ist, bei dem die Schaltvorrichtung einen Schaltungsträger mit Schaltkontakten und eine auf dem Schaltungsträger aufliegende Federscheibe aufweist.

Durch Vorsehen eines Schaltungsträgers mit Schaltkontakten und einer auf dem Schaltungsträger aufliegenden Federscheibe kann zum einen ein sehr verlässlicher Sitzbelegungsschalter bereitgestellt werden, da Federscheiben bewährte Schaltelemente darstellen. Zum anderen kann eine Miniaturisierung eines Sitzbelegungsschalters ohne Beeinträchtigung der Zuverlässigkeit erreicht werden. Die Miniaturisierung bringt unter anderem den Vorteil einer kostengünstigen Herstellung. Als Schaltungsträger kann eine Leiterplatte, ein Stanzgitter, ein MIDbeschichtetes Kunststoffteil oder auch ein mit Leitlacken beschichtetes Kunststoffteil eingesetzt werden.

In Weiterbildung der Erfindung ist vorgesehen, dass die Federscheibe über den zum Schalten der Schaltvorrichtung vorgesehenen Federweg prellfrei verformbar ist.

Im Unterschied zu üblichen Federscheibenschaltern, die nach Überwindung eines Druckpunkts mehr oder weniger selbsttätig in die durchgedrückte Stellung mit dann durchgeschalteter Schaltvorrichtung schnappen, ist erfindungsgemäß vorgesehen, ein solches Umschnappen der Federscheibe zu vermeiden. Es hat sich herausgestellt, dass ein solches Umschnappen der Federscheibe ein für einen Sitzenden hörbares Geräusch ergibt, das nicht akzeptiert wird. Die Verwendung einer sogenannten prellfreien Federscheibe verhindert das Entstehen des störenden Knackgeräusches oder Schnappgeräusches, dennoch können aber die Vorteile eines Federscheibenschalters genutzt werden.

In Weiterbildung der Erfindung sind das Gehäuse und das Betätigungselement jeweils mit einer Anschlagfläche als Überdrückschutz für die Federscheibe versehen. Vorteilhafterweise liegen bei durchgedrückter Federscheibe und durchgeschalteter elektrischer Schaltvorrichtung die Anschlagflächen von Gehäuse und Betätigungselement aneinander.

Gerade bei einem Sitzbelegungsschalter hat sich das Vorsehen eines Überdrückschutzes für die Federscheibe als sehr vorteilhaft herausgestellt. Das Überdrücken der Federscheibe durch zu hohe Belastung kann die Federscheibe beschädigen oder zumindest deren Federkennlinie verändern. Dies ist bei einer sicherheitsrelevanten Anwendung wie einem Sitzbelegungsschalter äußerst kritisch zu sehen. Gerade bei Fahrzeugsitzen können erhebliche Überbelastungen eines Fahrzeugsitzes auftreten, beispielsweise wenn schweres Ladegut auf dem Sitz befestigt wird. Dabei können die Belastungen, für die ein Fahrzeugsitz an und für sich ausgelegt ist, ohne weiteres überschritten werden. Das Vorsehen eines Überdrückschutzes für die Federscheibe ermöglicht es somit, den Sitzbelegungsschalter vor Beschädigung zu schützen.

In Weiterbildung der Erfindung weist das Gehäuse wenigstens zwei Anschlagflächen auf, wobei die Anschlagflächen an Halteeinrichtungen für die Leiterplatte vorgesehen sind.

Auf diese Weise können in dem Gehäuse die Halteeinrichtungen für die Leiterplatte wenigstens teilweise eine Doppelfunktion übernehmen, indem sie gleichzeitig Anschlagflächen des Überdrückschutzes bereitstellen.

In Weiterbildung der Erfindung ist der Sitzbelegungsschalter ausgebildet, an einem Schaumelement des Fahrzeugsitzes befestigt zu werden.

Durch Einschäumen kann der Sitzbelegungsschalter auf kostengünstige Weise befestigt werden. Alternativ kann der Sitzbelegungsschalter in das Sitzkissen eingeklebt, eingeklipst oder eingesteckt werden.

In Weiterbildung der Erfindung ist das Gehäuse ausgebildet, an einer Sitzwanne eines Fahrzeugsitzes befestigt zu werden.

Auch auf diese Weise kann eine sichere Befestigung erzielt werden.

In Weiterbildung der Erfindung ist das Gehäuse ausgebildet, an einer Unterfederung eines Fahrzeugsitzes befestigt zu werden.

Auf diese Weise kann der Sitzbelegungsschalter unterhalb des Sitzkissens befestigt werden und ist dadurch für eine Reparatur oder einen Austausch vergleichsweise leicht zugänglich. Insbesondere kann das Sitzkissen selbst ohne Einbauten hergestellt werden, was wiederum dem Federungskomfort zugute kommt.

In Weiterbildung der Erfindung ist das Gehäuse einstückig ausgebildet und weist ein Gehäuseunterteil und ein Gehäuseoberteil auf, wobei das Gehäuseunterteil und das Gehäuseoberteil zueinander klappbar ausgebildet sind.

Auf diese Weise kann das Gehäuse in einfacher Weise hergestellt werden und die Anzahl der erforderlichen Einzelteile wird reduziert. Die Montage des Sitzbelegungsschalters wird durch die klappbare Ausbildung des Gehäuses ebenfalls erleichtert.

In Weiterbildung der Erfindung ist das Gehäuse balkenartig ausgebildet und im Bereich der beiden Enden des Gehäuses ist jeweils ein Betätigungselement sowie eine elektrische Schaltvorrichtung mit Schaltungsträger und Federscheibe angeordnet.

Auf diese Weise können zwei elektrische Schaltvorrichtungen in dem Sitzbelegungsschalter bereitgestellt werden, beispielsweise um eine nicht korrekte Sitzposition erfassen zu können. Eine nicht korrekte Sitzposition kann bei der Auslösung eines Airbags ein Sicherheitsrisiko darstellen und stellt dadurch eine wichtige, sicherheitsrelevante Information dar. Indem das Gehäuse balkenartig ausgebildet ist, können elektrische Zuleitungen geschützt innerhalb des Gehäuses geführt werden. Es ist beispielsweise auch möglich, aus Kostengründen innerhalb des Gehäuses keine Kabelverbindungen, sondern eine Leiterplatte vorzusehen, die sich innerhalb des balkenartigen Gehäuses erstreckt und im Bereich ihrer beiden Enden jeweils Schaltkontakte für jeweils eine Federscheibe aufweist.

In Weiterbildung der Erfindung ragt zwischen den beiden Enden des balkenartigen Gehäuses ein Vorsprung ab, der an seinem freien Ende einen Steckverbinder zum Anschließen von Kabeln aufweist.

Auf diese Weise kann der Sitzbelegungsschalter in besonders einfacher und sicherer Weise kontaktiert werden, indem der Vorsprung zu einer leicht zugänglichen Stelle führt, beispielsweise außerhalb einer Sitzwanne.

Das der Erfindung zugrundeliegende Problem wird auch durch einen Fahrzeugsitz mit einem erfindungsgemäßen Sitzbelegungsschalter gelöst, bei dem der Sitzbelegungsschalter an einem Schaumelement des Fahrzeugsitzes befestigt ist.

Der Sitzbelegungsschalter kann eingeschäumt, eingeklipst, eingesteckt oder auch eingeklebt werden.

Erfindungsgemäß ist auch ein Fahrzeugsitz mit wenigstens einem erfindungsgemäßen Sitzbelegungsschalter bereitgestellt, bei dem der wenigstens eine Sitzbelegungsschalter gegenüber einem Schaumelement des Fahrzeugsitzes vorgesehen ist, wobei das Schaumelement gegenüber dem Betätigungselement des Sitzbelegungsschalters mit einer Gleitfläche versehen ist.

Bei Schaumelementen oder allgemein nachgiebigen Elementen eines Fahrzeugsitzes, an denen ein Betätigungselement des Sitzbelegungsschalters anliegt, hat sich herausgestellt, dass eine zuverlässige Auslösung des Sitzbelegungsschalters problematisch sein kann, wenn sich das Schaumelement des Fahrzeugsitzes an dem Betätigungselement verhakt oder wenn zwischen Schaumelement und Betätigungselement erhebliche Reibung auftritt. Dies kann zu einem Verkanten von Sitzbelegungsschalter und Schaumelement und damit zu Fehlauslösungen oder ausbleibenden Auslösungen führen. Durch Vorsehen einer Gleitfläche an dem Schaumelement kann eine wesentliche Verbesserung des Auslöseverhaltens des Sitzbelegungsschalters erreicht werden. Die Gleitfläche ist dabei so ausgebildet, dass zwischen dem Betätigungselement und der Gleitfläche eine gegenüber der Materialpaarung von dem Schaumelement und Betätigungselement eine wesentlich verringerte Reibung auftritt. Außerdem sorgt die Gleitfläche für eine flächige Verteilung der auf der Oberseite des Sitzkissens gegebenenfalls punktuell eingeleiteten Kraft und dadurch für eine zuverlässige Schaltsignalerzeugung.

Gemäß der Erfindung ist auch ein Fahrzeugsitz mit einem erfindungsgemäßen Sitzbelegungsschalter vorgesehen, bei dem der wenigstens eine Sitzbelegungsschalter an einer Unterfederung des Fahrzeugsitzes befestigt ist.

Vorteilhafterweise kann der Sitzbelegungsschalter an einem Verbindungselement für Federdrähte der Unterfederung angeordnet sein.

Vorteilhafterweise ist das wenigstens eine Verbindungselement für die Federdrähte mit einer Aufnahme für das Gehäuse des Sitzbelegungsschalters versehen.

Auf diese Weise kann der Sitzbelegungsschalter beispielsweise in die Aufnahme an dem Verbindungselement eingerastet werden.

Gemäß der Erfindung ist auch ein Fahrzeugsitz mit einem erfindungsgemäßen Sitzbelegungsschalter vorgesehen, bei dem der Sitzbelegungsschalter an einer Sitzwanne des Fahrzeugsitzes vorgesehen ist.

Beispielsweise ist die Sitzwanne mit einer Aufnahme zum Einrasten des Gehäuses der Sitzbelegungsschalters versehen, um diesen sicher und schnell an der Sitzwanne befestigen zu können.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, in den Zeichnungen dargestellten Ausführungsformen lassen sich dabei in beliebiger Weise kombinieren, ohne den Rahmen der Erfindung zu überschreiten.

In den Zeichnungen zeigen:
- Fig. 1: eine Ansicht eines erfindungsgemäßen Sitzbelegungsschalters gemäß einer ersten bevorzugten Ausführungsform in einer Ansicht von schräg oben,
- Fig. 2: eine Schnittansicht des Sitzbelegungsschalters der Fig. 1 in einem ersten Schaltzustand,
- Fig. 3: eine Schnittansicht des Sitzbelegungsschalters der Fig. 1 in einem zweiten Schaltzustand,
- Fig. 4: eine Darstellung verschiedener möglicher Federkennlinien einer Federscheibe in dem Sitzbelegungsschalter der Fig. 1,
- Fig. 5: eine Federkennlinie einer konventionellen Federscheibe,
- Fig. 6: eine Darstellung des Sitzbelegungsschalters der Fig. 1 in auseinandergezogener Darstellung und im aufgeklappten Zustand,
- Fig. 7: einen erfindungsgemäßen Sitzbelegungsschalter gemäß einer zweiten bevorzugten Ausführungsform der Erfindung in einer Ansicht von schräg oben,
- Fig. 8: den Sitzbelegungsschalter der Fig. 7 in auseinandergezogener Darstellung,
- Fig. 9: eine Schnittansicht des Sitzbelegungsschalters der Fig. 7 im eingebauten Zustand,
- Fig. 10: eine erfindungsgemäßen Sitzbelegungsschalter gemäß einer dritten bevorzugten Ausführungsform der Erfindung in einer Ansicht von schräg oben,
- Fig. 11: den Sitzbelegungsschalter der Fig. 10 in einer Ansicht von schräg unten,
- Fig. 12: den Sitzbelegungsschalter der Fig. 10 in auseinandergezogener Darstellung,
- Fig. 13: eine Schnittansicht des Sitzbelegungsschalters der Fig. 12,
- Fig. 14: einen erfindungsgemäßen Sitzbelegungsschalter gemäß einer vierten bevorzugten Ausführungsform der Erfindung in einer Ansicht von schräg oben und
- Fig. 15: den Sitzbelegungsschalter der Fig. 14 in auseinandergezogener Darstellung.

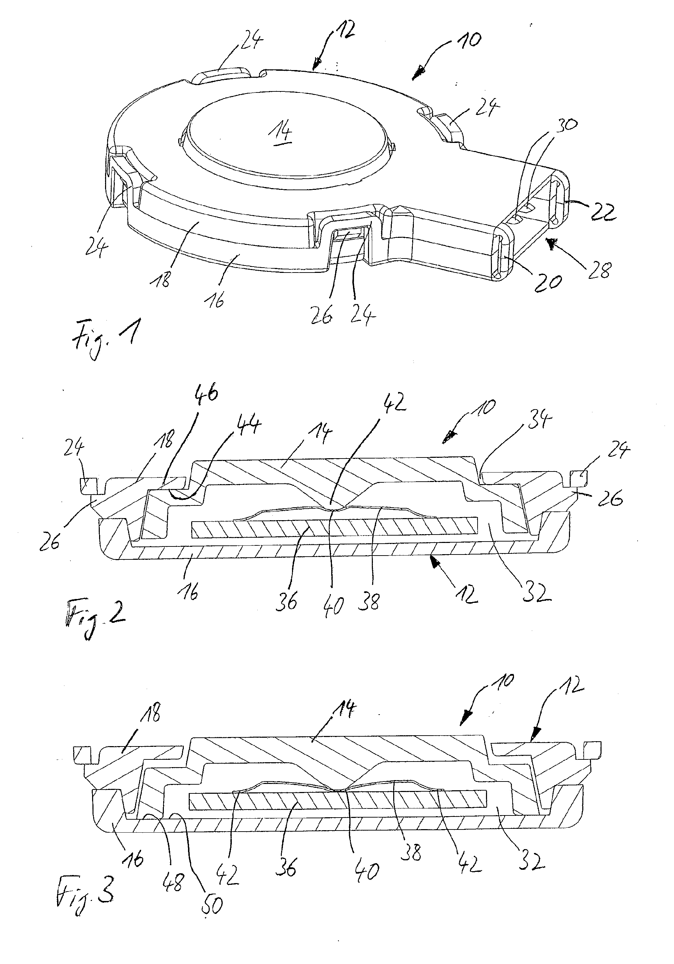

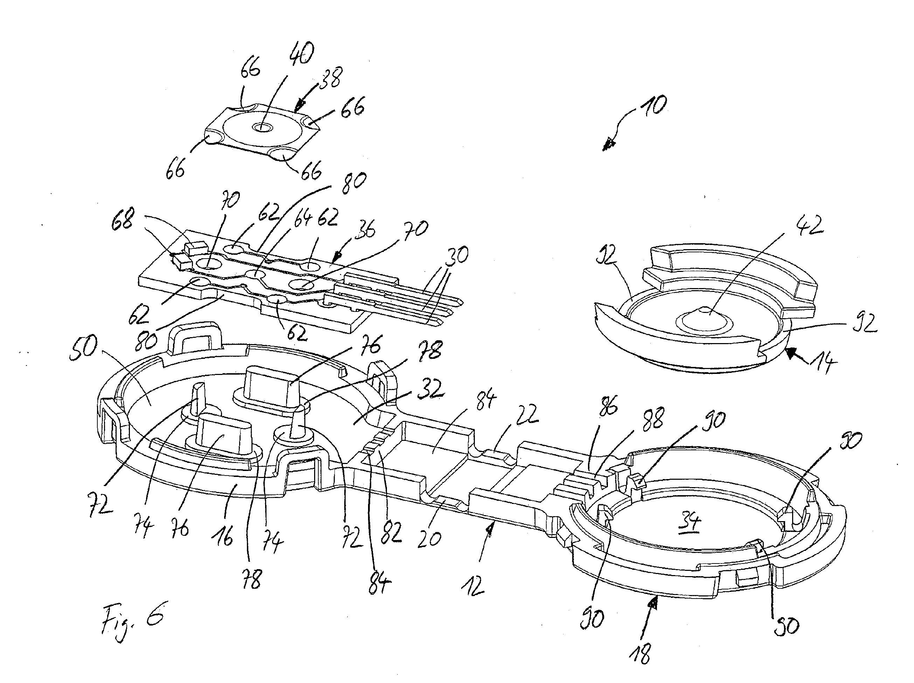

Die Darstellung der Fig. 1 zeigt in einer Ansicht von schräg oben einen erfindungsgemäßen Sitzbelegungsschalter 10 mit einem Gehäuse 12 und einem relativ zum Gehäuse beweglichen Betätigungselement 14. Das Betätigungselement 14 ist für eine elektrische Schaltvorrichtung innerhalb des Gehäuses 12 vorgesehen, die in der Darstellung der Fig. 1 nicht erkennbar ist. Das Gehäuse 12 weist ein Unterteil 16 und ein Oberteil 18 auf, die mittels zweier Verbindungsstege 20 und 22 klappbar miteinander verbunden sind, siehe auch Fig. 6.

Das Unterteil 16 ist mit insgesamt vier Rastbügeln 24 versehen, die im zusammengeklappten Zustand des Gehäuses, wie er in Fig. 1 dargestellt ist, von Rastnasen 26 am Oberteil 18 untergriffen werden. Beim Zusammenklappen des Gehäuses kommen die Rastnasen 26 zunächst mit einer unteren abgeschrägten Fläche oben an den Rastbügeln 24 zu liegen. Wird das Oberteil 18 dann weiter in Richtung auf das Unterteil 16 gedrückt, werden die Rastbügel 24 von den Rastnasen 26 zunächst beiseite gedrückt, bis die Rastnasen 26 unter die Rastbügel 24 in die in Fig. 1 dargestellte Position schnappen.

An dem in Fig. 1 rechten Ende des Gehäuses bildet dieses einen Steckverbinder 28 in Form einer Steckbuchse aus. In der Darstellung der Fig. 1 sind zwei Kontaktstifte 30 des Steckverbinders 28 zu erkennen. In den Steckverbinder 28, der abschnittsweise durch das Oberteil 18 und das Unterteil 16 sowie die Kontaktstifte 30 gebildet ist, kann ein weiterer Steckverbinder in Form eines Steckers eingesteckt werden, um den Sitzbelegungsschalter 10 elektrisch zu kontaktieren.

Die Darstellung der Fig. 2 zeigt eine Schnittansicht des Sitzbelegungsschalters 10 der Fig. 1, wobei die Schnittebene durch zwei einander gegenüberliegende Rastbügel 24 gelegt ist. In der Darstellung der Fig. 2 ist zunächst zu erkennen, wie die Rastnasen 26 die Rastbügel 24 hintergreifen. Das Unterteil 16 und das Oberteil 18 bilden im zusammengeklappten Zustand des Gehäuses 12 einen Hohlraum 32, der nach oben hin über eine Öffnung 34 im Oberteil 18 zugänglich ist. Bei der dargestellten Ausführungsform des Sitzbelegungsschalters 10 ist die Öffnung 34 kreisrund ausgebildet. In diese Öffnung 34 ist das Betätigungselement 14 eingesetzt, das etwa die Form einer nach unten, zum Unterteil 16 und somit dem Hohlraum 32 hin geöffneten Wanne aufweist. Das Betätigungselement 14 ist unverlierbar an dem Gehäuse 12 angeordnet, kann aber ausgehend von der in Fig. 2 dargestellten oberen Position in die in Fig. 3 dargestellte untere Position bewegt werden.

Innerhalb des Hohlraums 32 ist weiter eine Leiterplatte 36 angeordnet, auf der eine Federscheibe 38 aufliegt. Die Federscheibe 38 weist mittig eine Ausnehmung 40 auf, in die ein mittig am Betätigungselement 14 angeordneter Vorsprung 42 eingreift.

Wird das Betätigungselement 14 in der Darstellung der Fig. 2 nach unten, in Richtung auf das Unterteil 16, zu gedrückt, verbiegt sich die Federscheibe 38, bis die in der Darstellung der Fig. 3 dargestellte Position erreicht wird. In dieser durchgedrückten Position kontaktiert eine Unterseite der Ausnehmung 40 einen in der Darstellung der Fig. 3 nicht erkennbaren Schaltkontakt auf der Leiterplatte 36. Da die Federplatte 38 auch seitlich in den Bereichen 42 auf Schaltkontakten der Leiterplatte 36 aufliegt, kann dadurch ein elektrischer Kontakt zwischen den unterschiedlichen Schaltkontakten auf der Leiterplatte 36 hergestellt und dadurch ein Schaltsignal ausgegeben werden.

Der in Fig. 2 dargestellte Zustand stellt somit den unbelasteten Zustand des Sitzbelegungsschalters 10 dar, wohingegen der in Fig. 3 dargestellte Zustand den belasteten Zustand des Sitzbelegungsschalters 10 darstellt, in dem ein Schaltsignal ausgegeben wird.

Die Verwendung der Federscheibe 38 in Verbindung mit der Leiterplatte 36 ermöglicht eine miniaturisierte Ausführung des Sitzbelegungsschalters 10. Dennoch werden durch die Federscheibe 38 zwei zuverlässig getrennte Schaltzustände definiert. Die Federscheibe 38 sorgt gleichzeitig für eine Vorspannung des Betätigungselements 14 in die in Fig. 2 dargestellte obere Position. Zusätzliche Federelemente, um das Betätigungselement 14 in dieser Position zu halten, sind daher nicht erforderlich.

Anhand der Darstellungen der Fig. 1 bis 3 ist zu erkennen, dass der Hohlraum 32 abgeschlossen ist. Auch im durchgeschalteten Zustand der Fig. 3 liegt zwischen dem Oberteil 18 und dem Betätigungselement 14 lediglich ein sehr schmaler umlaufender Spalt. Dadurch ist zuverlässig verhindert, dass Verunreinigungen in den Hohlraum 32 oder allgemein in das Innere des Gehäuses 12 eindringen können.

Das Betätigungselement 2 liegt in dem in Fig. 2 dargestellten Zustand mit einem umlaufenden Absatz 44 an einer Unterseite eines umlaufenden Vorsprungs 46 des Gehäuseoberteils 18 an, wobei dieser Vorsprung 46 die Öffnung 34 umgibt. Die in Fig. 2 dargestellte obere Position des Betätigungselements 14, in die das Betätigungselement 14 durch die Federwirkung der Federscheibe 38 vorgespannt wird, ist somit exakt durch die Unterseite des umlaufenden Vorsprungs 46 am Gehäuseoberteil 18 und den Absatz 44 am Betätigungselement 14 definiert.

Die in Fig. 3 dargestellte untere Position des Betätigungselements 14, in der die Federscheibe 38 einen Schaltkontakt auf der Leiterplatte 36 mittels der Ausnehmung 40 kontaktiert, ist ebenfalls exakt festgelegt. In dieser unteren Position liegt ein unterer Rand 48 des Betätigungselements 14 auf einer Innenseite 50 des Gehäuseunterteils 16 auf. Das Betätigungselement 14 kann sich somit nicht weiter in Richtung auf das Gehäuseunterteil 16 zu bewegen, als in der Darstellung der Fig. 3 dargestellt ist, da dann der untere Rand 48 auf einer Innenseite 50 des Gehäuseunterteils 16 aufliegt.

Gleichzeitig wird durch diese Begrenzung der Bewegung des Betätigungselements 14 ein Überdrückschutz für die Federscheibe 38 realisiert. Die Federscheibe 38 kann lediglich so weit in Richtung auf die Leiterplatte 36 zu gedrückt werden, wie dies in Fig. 3 dargestellt ist. Eine Beschädigung der Federscheibe 38 durch zu hohe Betätigungskräfte auf das Betätigungselement 14 wird dadurch zuverlässig verhindert. Gerade bei einem Sitzbelegungsschalter 10 ist ein solcher Überdrückschutz sehr vorteilhaft, da nicht ausgeschlossen werden kann, dass die Sitzfläche des mit dem erfindungsgemäßen Sitzbelegungsschalter 10 versehenen Sitzes übermäßig belastet wird.

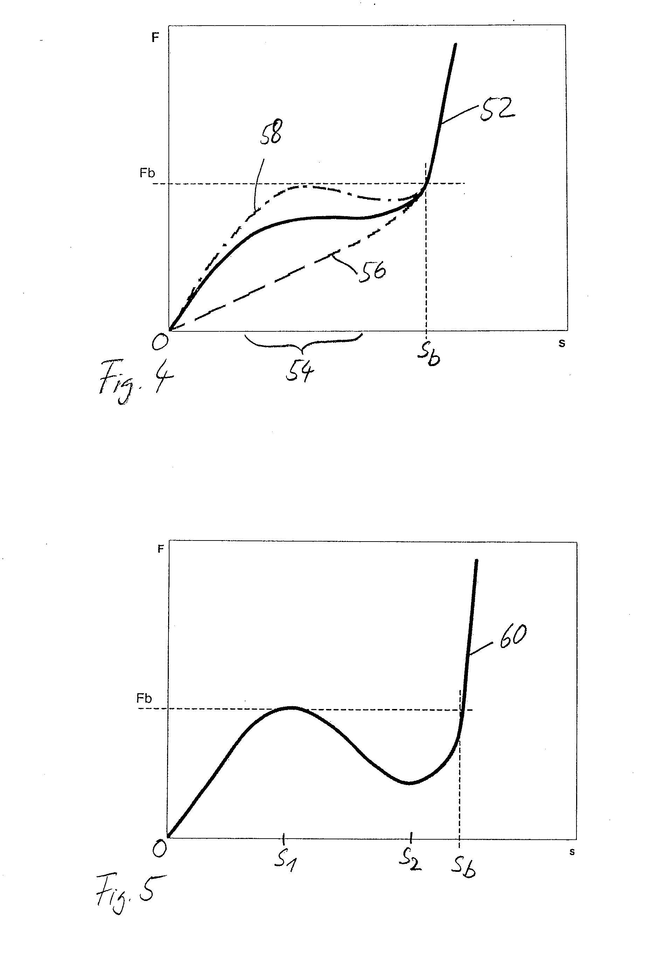

Die Darstellung der Fig. 4 zeigt als durchgezogene Linie die Federkennlinie 52 der Federscheibe 38, wobei die Federkraft F über dem Verformungsweg s aufgetragen ist. Die Federkraft F steigt zunächst annähernd linear mit dem Verformungsweg s an, um dann in einem Bereich 54 einen annähernd wagerechten Verlauf zu nehmen. Anschließend an den Bereich 54 steigt der Verlauf wieder steiler an, um dann oberhalb eines Verformungsweges s_{b} wieder in einen linearen Verlauf überzugehen. Der Verformungsweg s_{b} stellt den Zustand dar, den die Federscheibe 38 in Fig. 3 erreicht hat und somit mit der Ausnehmung 40 die Leiterplatte 36 berührt. Beim Verformungsweg s_{b} und der Betätigungskraft F_{b} wird also ein Schaltsignal durch den Sitzbelegungsschalter 10 erzeugt.

Die Federkennlinie 52 lässt erkennen, dass die Federscheibe 38 während des gesamten benötigten Verformungsweges bis zum Verformungsweg s_{b} prellfrei verformbar ist, dass also kein Umschnappen der Federscheibe 38 auftritt. Ein solches Umschnappen der Federscheibe 38, wie es bei herkömmlichen Federscheibenschaltern zu beobachten ist, würde zu einem Knackgeräusch oder Schnappgeräusch führen, das bei Sitzbelegungsschaltern für Fahrzeuge nicht akzeptiert wird.

In Fig. 4 ist weiter eine gestrichelte Kennlinie 56 unterhalb der durchgezogenen Federkennlinie 52 eingezeichnet sowie weiter eine strichpunktierte Kennlinie 58 oberhalb der durchgezogenen Kennlinie 52. Die beiden Kennlinien 56, 58 markieren zwischen sich einen Bereich, in dem die Federkennlinie 52 einer für den erfindungsgemäßen Sitzbelegungsschalter 10 geeigneten Federscheibe 38 liegen kann. Innerhalb des Bereichs zwischen den Kennlinien 56, 58 ist eine Federscheibe prellfrei verformbar und verursacht bei einer Betätigung des Sitzbelegungsschalters 10 somit kein störendes Schnappgeräusch oder Knackgeräusch.

Im Unterschied hierzu zeigt die Darstellung der Fig. 5 eine Federkennlinie 60 einer herkömmlichen Federscheibe, die während der Verformung umschnappt und dadurch ein Schnappgeräusch verursacht. Sobald eine Betätigungskraft F_{b} bei einem Verformungsweg S1 erreicht ist, ändert die Steigung der Kennlinie 60 ihr Vorzeichen und fällt stark bis zu einem Verformungsweg S2 ab. Erst bei einem Verformungsweg, der größer als der Wert S2 ist, steigt die benötigte Betätigungskraft dann wieder steil an. Dieser Abfall der Federkennlinie 60 zwischen den Verformungswegen S1 und S2 führt zu einem sogenannten Prellen der Federscheibe und damit zu einem unterwünschten Schnappgeräusch oder Knackgeräusch bei der Verformung.

Die Darstellung der Fig. 6 zeigt den Sitzbelegungsschalter 10 in auseinandergezogener Darstellung und im aufgeklappten Zustand. Der Sitzbelegungsschalter 10 besteht aus lediglich vier Einzelteilen, nämlich dem Gehäuse 12 mit dem Gehäuseunterteil 16 und dem Gehäuseoberteil 18, die mittels der Stege 20, 22 klappbar miteinander verbunden sind, dem Betätigungselement 14, der Federscheibe 38 sowie der Leiterplatte 36, an der die Kontakte 30 befestigt sind. Die Leiterplatte 36 ist mit insgesamt fünf etwa kreisförmigen Schaltkontakten 62, 64 versehen. Vier Schaltkontakte 62 sind im Bereich der Ecken eines gedachten Quadrats angeordnet, wohingegen der fünfte Schaltkontakt 64 in der Mitte eines solchen gedachten Quadrats angeordnet ist. Die Federscheibe 38 weist eine allgemein quadratische Form auf und liegt mit ihren vier Eckbereichen 66 im unbelasteten Zustand lediglich auf den Schaltkontakten 62 auf. Wenn die Federscheibe 38 mittig belastet wird und den in Fig. 3 dargestellten Zustand einnimmt, liegt eine Unterseite der Ausnehmung 40 auf dem mittigen Schaltkontakt 64 auf der Leiterplatte 36 auf. Dadurch wird eine elektrische Verbindung zwischen einzelnen oder allen Schaltkontakten 62, 64 hergestellt und ein Schaltsignal wird ausgegeben.

In der Darstellung der Fig. 6 sind auf der Leiterplatte 36 noch zwei Bauelemente 68 zu erkennen, beispielsweise Widerstände. Weiter ist die Leiterplatte 36 mit zwei Durchgangsöffnungen 70 versehen, die voneinander beabstandet auf einer Mittellinie der Leiterplatte 36 liegen. Die Durchgangsöffnungen 70 sind für die Befestigung der Leiterplatte 36 im Gehäuse 12 vorgesehen.

Speziell weist das Unterteil 16 zwei Zapfen 72 auf, die sich ausgehend von zwei kreisscheibenförmigen Erhöhungen 74 auf der Innenseite 50 des Gehäuseunterteils 16 nach oben erstrecken. Die Leiterplatte 36 wird auf diese beiden Zapfen 72 aufgesetzt, so dass die Zapfen 72 sich durch die Durchgangsöffnungen 70 in der Leiterplatte 36 hindurch erstrecken. Die Leiterplatte 36 kann dann soweit in Richtung auf das Gehäuseunterteil 16 zu verschoben werden, bis ihre Unterseite auf der Oberseite der kreisscheibenförmigen Vorsprünge 74 aufliegt.

Das Gehäuseunterteil 16 ist weiter mit zwei etwa ovalzylindrischen Vorsprüngen 76 versehen, die sich ausgehend von zwei ovalscheibenförmigen Vorsprüngen 78 auf der Innenseite 50 des Gehäuseunterteils 16 aus nach oben erstrecken. Diese beiden Vorsprünge 76 greifen im montierten Zustand der Leiterplatte 36 an seitlichen Ausnehmungen 80 der Leiterplatte 36 an, um die Leiterplatte 36 dadurch zusätzlich zu fixieren.

Darüber hinaus sorgen die Vorsprünge 72, 76 auch für die exakte Ausrichtung der Federscheibe 38 relativ zur Leiterplatte 36 und speziell zu den Schaltkontakten 62, 64 auf der Leiterplatte 36. Nach dem Aufsetzen der Leiterplatte 36 auf die Vorsprünge 72, 76 wird die Federscheibe 38 zwischen die Zapfen 72, 76 gesetzt. Die Federscheibe 38 liegt dann mit ihren Seitenkanten lediglich in geringem Abstand zu den Zapfen 72, 76. Die Federscheibe kann sich zwischen den Zapfen 72, 76 aber nur soweit verschieben, dass ihre Eckbereiche 66 noch auf den Schaltkontakten 62 auf der Leiterplatte 36 aufliegen und auch die Unterseite der Ausnehmung 40 noch oberhalb des Schaltkontakts 64 angeordnet ist.

Das Gehäuseunterteil 16 ist weiter mit einem Zwischensteg 82 versehen, der den Raum 32, in dem die Leiterplatte 36 angeordnet wird, von einem Raum 84 trennt, der im verschlossenen Zustand des Gehäuses 12 den Steckverbinder 28 begrenzt. Dieser Steg 82 ist mit Ausnehmungen 84 zur abschnittsweisen Aufnahme der Kontakte 30 versehen, die in Form von Kontaktstiften ausgebildet sind. Vorliegend sind drei Ausnehmungen und drei Kontaktstifte vorgesehen.

In ähnlicher Weise ist das Gehäuseoberteil 18 mit einem Steg 86 versehen, der mit insgesamt drei Ausnehmungen 88 zum abschnittsweisen Aufnehmen der Kontakte 30 versehen ist. Im zusammengeklappten Zustand des Gehäuses 12 werden dadurch die Kontakte 30 zuverlässig in den Ausnehmungen 84, 88 gehalten und gleichzeitig trennen die Stege 82, 86 den Hohlraum 32, in dem die Leiterplatte 36 und die Federscheibe 38 angeordnet ist, von dem Raum 84 ab, der den Steckverbinder 28 bildet.

Das Gehäuseoberteil 18 ist in dem Bereich, der die Öffnung 34 umgibt, mit Rastnasen 90 versehen, die nach innen, zum Mittelpunkt der Öffnung 34 hin vorragen. Vorliegend sind insgesamt vier Rastnasen 90 vorgesehen. Die Rastnasen 90 sind dazu vorgesehen, hinter einen kreisringsegmentförmigen Rand 92 am Betätigungselement 14 zu schnappen, wenn das Betätigungselement 14 in der Darstellung der Fig. 6 von oben her in das Gehäuseoberteil 18 eingesetzt wird. Die Rastnasen 90 sind dabei so angeordnet, dass sich das Betätigungselement 14 im eingerasteten Zustand noch zwischen den Positionen der Fig. 2 und der Fig. 3 bewegen kann. Dennoch sorgen die Rastnasen 90 dafür, dass das Betätigungselement 14 unverlierbar am Gehäuseoberteil 18 gehalten ist und das Gehäuse 12 damit in einfacher Weise zugeklappt werden kann, ohne befürchten zu müssen, dass sich das Betätigungselement 14 bei diesem Zusammenklappen im Gehäuse 12 verkantet.

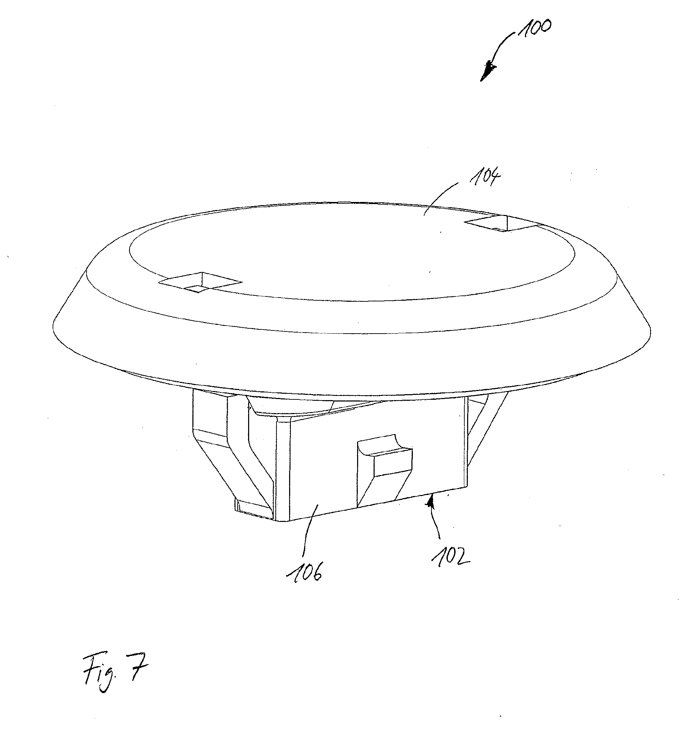

Die Darstellung der Fig. 7 zeigt einen Sitzbelegungsschalter 100 gemäß einer zweiten bevorzugten Ausführungsform der Erfindung. Der Sitzbelegungsschalter 100 weist ein Gehäuse 102 sowie ein Betätigungselement 104 auf, das relativ zum Gehäuse 102 bewegt werden kann, um eine in der Darstellung der Fig. 7 nicht erkennbare, im Inneren des Gehäuses 102 angeordnete elektrische Schaltvorrichtung zu betätigen. Das Gehäuse 102 ist an seinem, in Fig. 7 unteren Ende mit einem Steckverbinder 106 zum Einstecken einer elektrischen Anschlussleitung versehen. Das Betätigungselement 104 ist in Form einer in der Darstellung der Fig. 7 nach unten geöffneten Wanne ausgebildet und auf das Gehäuse 102 aufgesetzt. Eine seitliche Begrenzung des Sitzbelegungsschalters 100 wird durch das Betätigungselement 104 gebildet.

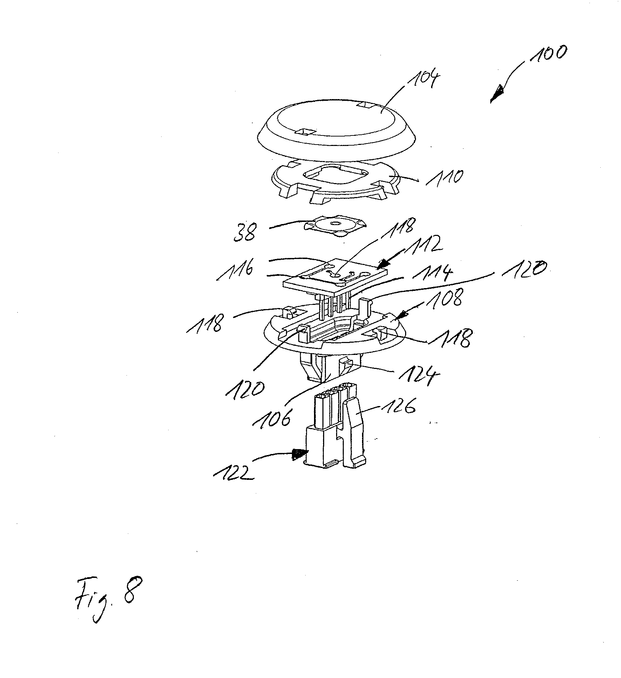

Die Darstellung der Fig. 8 zeigt den Sitzbelegungsschalter 100 in auseinandergezogener Darstellung. Das Gehäuse 102 weist ein Unterteil 108 und ein Oberteil 110 auf. In das Unterteil 108 ist eine Leiterplatte 112 mit Kontaktstiften 114 und Schaltkontakten 116, 118 angeordnet. Wie bei der Leiterplatte 36 des Sitzbelegungsschalters 10 der Fig. 6 sind vier Schaltkontakte 116 im Bereich der Ecken eines Quadrats angeordnet und der fünfte Schaltkontakt 118 ist im Bereich des Mittelpunktes des Quadrates angeordnet. Auf die Leiterplatte 112 wird eine Federscheibe 38 aufgesetzt, die identisch zur Federscheibe 38 in Fig. 5 ausgebildet ist. Wird die Federscheibe 38 dann mittig belastet, so wird der mittige Schaltkontakt 118 auf der Leiterplatte 112 kontaktiert und dadurch kann ein Schaltsignal ausgegeben werden. Das Oberteil 110 wird auf das Gehäuseunterteil 108 aufgeklipst und mittels zweier Rastnasen 118 dann am Gehäuseunterteil 108 gehalten. Zwischen dem Gehäuseunterteil 108 und dem Gehäuseoberteil 110 wird die Leiterplatte 112 eingeklemmt und dadurch gleichzeitig in ihrer Position gesichert.

Das Betätigungselement 104 wird mittels zweier Rastnasen 120 so am Gehäuseunterteil 108 gesichert, dass es zwar unverlierbar am Gehäuseunterteil 108 angeordnet aber relativ zu diesem und relativ zur Leiterplatte 112 noch bewegbar ist.

In der Darstellung der Fig. 8 ist ein Steckverbinder 122 dargestellt, der passend zum Steckverbinder 106 am Sitzbelegungsschalter 100 ausgebildet ist. Der Steckverbinder 106 am Gehäuseunterteil 108 weist eine Rastnase 124 auf, an der ein passender Rastbügel 126 am Steckverbinder 122 einrasten kann.

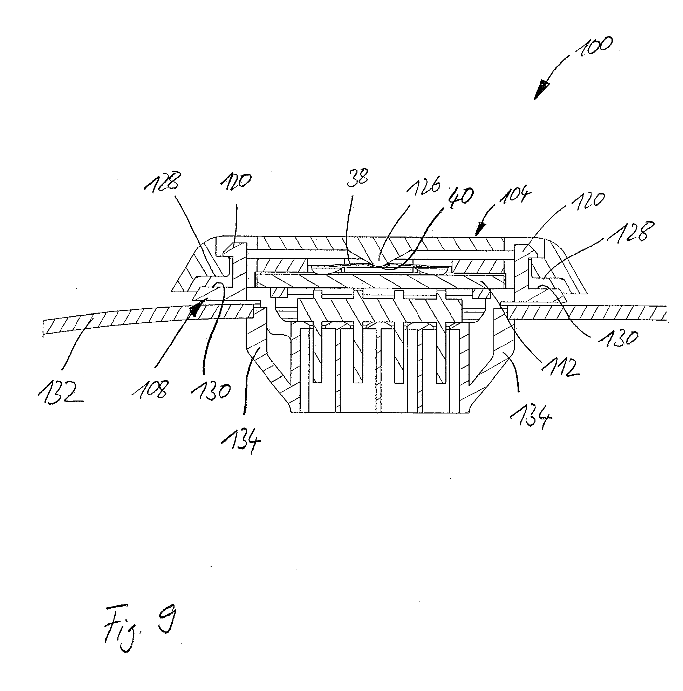

Die Darstellung der Fig. 9 zeigt eine Schnittansicht des Sitzbelegungsschalters 100 der Fig. 8. Das Betätigungselement 104 ist mittels der Rastnasen 120 unverlierbar am Gehäuseunterteil 108 gehalten, wobei das Betätigungselement 104 noch in Richtung auf das Gehäuseunterteil 108 zu bewegt werden kann. Bei einer Bewegung des Betätigungselements 104 in Richtung auf das Gehäuseunterteil 108 zu drückt ein mittiger Vorsprung 126 am Betätigungselement 104 in die Ausnehmung 40 in der Federscheibe 38. Das Betätigungselement 104 wird dann soweit in Richtung auf das Gehäuseunterteil 108 gedrückt, bis die Unterseite der Ausnehmung 40 auf dem in Fig. 8 nicht erkennbaren mittigen Schaltkontakt 118 der Leiterplatte 112 aufliegt. Ein Überdrückschutz für die Federscheibe 38 ist bei dem Sitzbelegungsschalter 100 dadurch realisiert, dass eine Anschlagfläche 128 am Betätigungselement 104 an einer gegenüberliegenden Anschlagfläche 130 am Gehäuseunterteil 108 anschlägt.

In der Darstellung der Fig. 9 ist der Sitzbelegungsschalter 100 in eine Öffnung in einer lediglich abschnittsweise dargestellten Sitzschale 132 eingerastet. Das Gehäuseunterteil 108 ist hierzu mit zwei seitlich abragenden Federbügeln 134 versehen, die abschnittsweise hinter die Sitzschale 132 schnappen und den Sitzbelegungsschalter 100 dadurch an der Sitzschale 132 sichern.

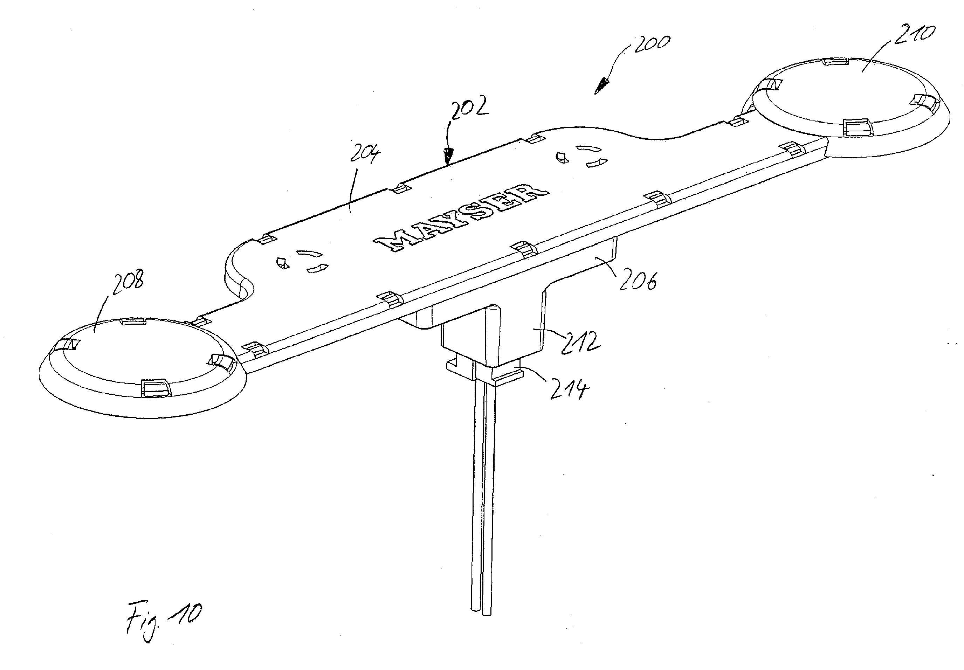

Die Darstellung der Fig. 10 zeigt einen erfindungsgemäßen Sitzbelegungsschalter 200 gemäß einer dritten bevorzugten Ausführungsform in einer Ansicht von schräg oben. Der Sitzbelegungsschalter 200 weist ein etwa balkenförmiges Gehäuse 202 mit einem Gehäuseoberteil 204 und einem Gehäuseunterteil 206 auf. An beiden Enden des balkenartigen Gehäuses 202 ist jeweils ein Betätigungselement 208, 210 vorgesehen. Unterhalb der Betätigungselemente 208, 210 ist jeweils eine in der Darstellung der Fig. 10 nicht erkennbare elektrische Schaltvorrichtung angeordnet. Um mit dem Sitzbelegungsschalter 200 ein Schaltsignal zu erzeugen, müssen die Betätigungselemente 208, 210 nach unten, in Richtung auf das Gehäuseunterteil 206 zu, bewegt werden.

In der Mitte des balkenartigen Gehäuses 202 zwischen den beiden Betätigungselementen 208, 210 ist ein in der Darstellung der Fig. 10 nach unten abragender Vorsprung vorgesehen, der einen elektrischen Steckverbinder ausbildet. In diesen Steckverbinder 212 ist ein passender Steckverbinder 214 eingesteckt, der mit einer elektrischen Anschlussleitung verbunden ist.

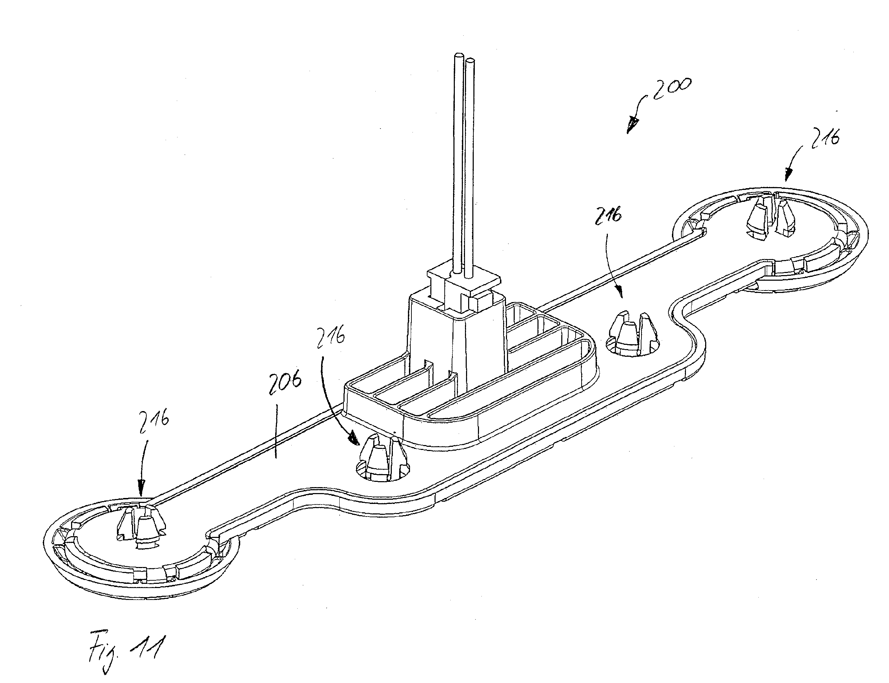

Die Darstellung der Fig. 11 zeigt den Sitzbelegungsschalter 200 der Fig. 10 in einer Ansicht von schräg unten. Das Gehäuseunterteil 206 ist mit insgesamt vier Rasteinrichtungen 216 versehen, die jeweils drei, radial nach außen abstehende Rastnasen aufweisen. Mittels dieser Rastvorrichtungen 216 kann der Sitzbelegungsschalter 200 beispielsweise an einer Sitzschale eines Fahrzeugsitzes eingerastet werden.

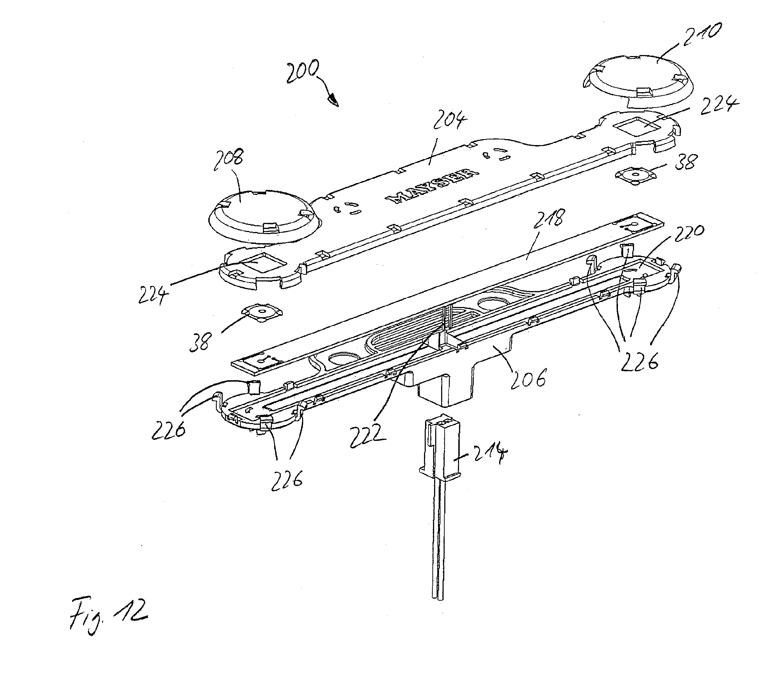

Die Darstellung der Fig. 12 zeigt den Sitzbelegungsschalter 200 der Fig. 10 in einer auseinandergezogenen Darstellung. Zwischen dem Gehäuseunterteil 206 und dem Gehäuseoberteil 204 ist eine Leiterplatte 218 angeordnet, die sich im Wesentlichen über die gesamte Länge des balkenartigen Gehäuses erstreckt. Die Leiterplatte 218 ist im Bereich ihrer beiden Enden mit Schaltkontakten versehen, die so ausgebildet und angeordnet sind, wie bereits anhand der Leiterplatte 36 des Sitzbelegungsschalters 10 in Fig. 6 erläutert wurde. Auf diese Schaltkontakte der Leiterplatte 218 wird jeweils eine Federscheibe 38 aufgesetzt, die identisch zu der im Zusammenhang mit dem Sitzbelegungsschalter 10 erläuterten Federscheibe 38 ist.

Die Leiterplatte 218 wird in einer passenden Ausnehmung 220 im Gehäuseunterteil 206 angeordnet und weist mittig Kontaktstifte 222 auf, die dann für eine Kontaktierung des Steckverbinders 214 genutzt werden.

Die Leiterplatte 218 ist mit Leiterbahnen versehen, die von den Schaltkontakten an ihren jeweiligen beiden Enden bis zu den Kontaktstiften 222 führen. Innerhalb des Sitzbelegungsschalters 200 kann dadurch vollständig auf Kabelverbindungen verzichtet werden. Der Sitzbelegungsschalter 200 kann dadurch kostengünstig hergestellt werden.

Nach dem Einlegen der Leiterplatte 218 in das Gehäuseunterteil 206 wird das Gehäuseoberteil 204 auf das Gehäuseunterteil 206 aufgerastet. Die Federscheiben 38 werden dabei durch passende, quadratförmige Ausnehmungen 224 im Gehäuseoberteil 204 gehalten und exakt so ausgerichtet, dass sie oberhalb der Schaltkontakte auf der Leiterplatte 218 liegen.

Nach dem Aufrasten des Gehäuseoberteils 204 werden die beiden Betätigungselemente 208, 210 auf das Gehäuseunterteil 206 aufgerastet. Die Betätigungselemente 208, 210 werden dabei durch jeweils vier Rastnasen 226 am Gehäuseunterteil 206 so gehalten, dass sie relativ zum Gehäuseunterteil 206 noch verschiebbar sind, um die Federscheiben 38 verformen zu können.

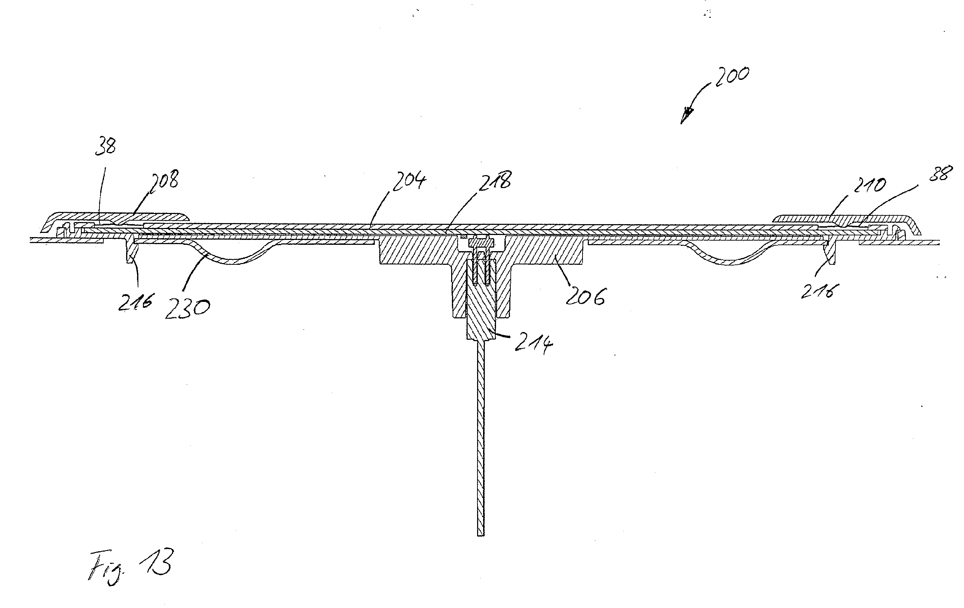

Die Darstellung der Fig. 13 zeigt eine Schnittansicht des Sitzbelegungsschalters 200 der Fig. 10. In dieser Schnittansicht ist der Sitzbelegungsschalter 200 in passende Ausnehmungen in eine Sitzwanne 230 eingerastet und dadurch sicher an der Sitzwanne 230 gehalten. Das Gehäuseunterteil 206 weist hierzu die Rastvorrichtungen 216 auf, die im eingerasteten Zustand die Sitzwanne 230 abschnittsweise hintergreifen können.

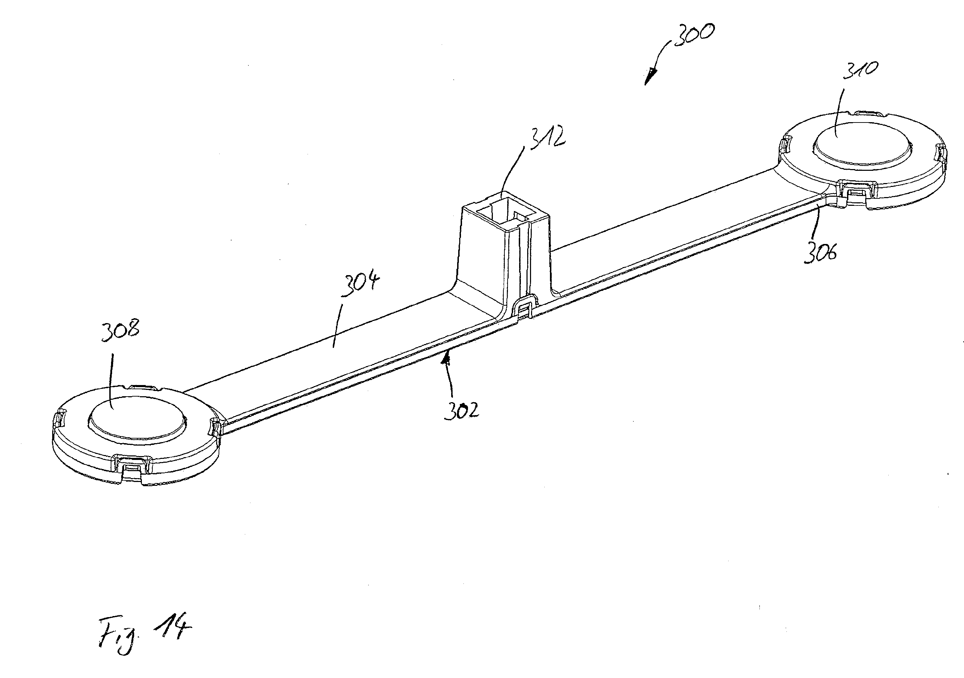

Die Darstellung der Fig. 14 zeigt einen erfindungsgemäßen Sitzbelegungsschalter 300 gemäß einer dritten bevorzugten Ausführungsform der Erfindung. Der Sitzbelegungsschalter 300 weist ein balkenartiges Gehäuses 302 auf, das ein Gehäuseoberteil 304 und ein Gehäuseunterteil 306 aufweist. An beiden Enden des balkenartigen Gehäuses 302 ist jeweils ein Betätigungselement 308, 310 angeordnet, das relativ zum Gehäuse 302 beweglich in diesem angeordnet ist. In der Mitte des balkenartigen Gehäuses 302 ist ein in der Darstellung der Fig. 14 nach oben abragender Vorsprung 312 vorgesehen, der einen Steckverbinder ausbildet.

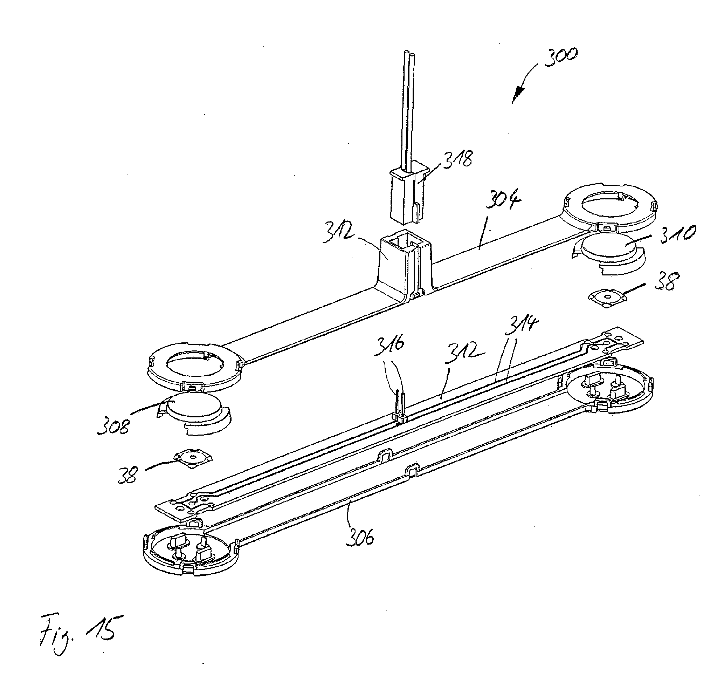

Die Darstellung der Fig. 15 zeigt den Sitzbelegungsschalter 300 der Fig. 14 in auseinandergezogener Darstellung. An beiden Enden des balkenartigen Gehäuses ist eine Anordnung vorgesehen, die etwa dem Sitzbelegungsschalter 10 der Fig. 6 entspricht. Speziell ist das Gehäuseunterteil 306 an beiden Enden identisch zu dem Gehäuseunterteil 16 des Sitzbelegungsschalters 10 der Fig. 6 ausgebildet und das Gehäuseoberteil 304 ist an beiden Enden identisch zu dem Gehäuseoberteil 18 des Sitzbelegungsschalters 10 in Fig. 6 ausgebildet. Die beiden Betätigungselemente 308, 310 sind identisch zum Betätigungselement 14 des Sitzbelegungsschalters 10 der Fig. 6 ausgebildet. Jedes Betätigungselement 308, 310 betätigt eine Federscheibe 38, wie sie bereits anhand des Sitzbelegungsschalters 10 der Fig. 6 erläutert wurde.

Zwischen dem Gehäuseunterteil 306 und dem Gehäuseoberteil 304 ist eine Leiterplatte 312 vorgesehen, die im Bereich ihrer beiden Enden mit einer Schaltkontaktanordnung versehen ist, wie sie bereits anhand der Leiterplatte 36 des Sitzbelegungsschalters 10 der Fig. 1 bis 6 erläutert wurde. Von diesen Schaltkontakten laufen auf der Leiterplatte 312 Leiterbahnen 314 bis zu zwei Kontaktstiften 316, die von der Leiterplatte 312 in der Darstellung der Fig. 15 aus nach oben abragen und in dem Vorsprung 312 des Gehäuseoberteils 304 aufgenommen zu werden und dadurch einen Steckverbinder zu bilden. In diesen Steckverbinder kann dann ein weiterer Steckverbinder 318 eingesteckt werden, um eine elektrische Anschlussleitung mit dem Sitzbelegungsschalter 300 zu verbinden.

Der Sitzbelegungsschalter 300 kann beispielsweise in ein Sitzkissen eines Fahrzeugsitzes eingeschäumt werden und dadurch relativ zum Fahrzeugsitz fixiert werden.

## Patentansprüche

1. Sitzbelegungsschalter mit einem Gehäuse und wenigstens einer in dem Gehäuse angeordneten elektrischen Schaltvorrichtung, wobei an dem Gehäuse ein relativ zum Gehäuse bewegliches Betätigungselement für die Schaltvorrichtung angeordnet ist, **dadurch gekennzeichnet, dass** die Schaltvorrichtung einen Schaltungsträger mit Schaltkontakten und eine auf dem Schaltungsträger aufliegende Federscheibe aufweist.

2. Sitzbelegungsschalter nach Anspruch 1, **dadurch gekennzeichnet, dass** die Federscheibe über den zum Schalten der Schaltvorrichtung vorgesehenen Federweg prellfrei verformbar ist.

3. Sitzbelegungsschalter nach einem der vorstehenden Ansprüche, **dadurch gekennzeichnet, dass** das Gehäuse und das Betätigungselement jeweils mit einer Anschlagfläche als Überdrückschutz für die Federscheibe versehen sind.

4. Sitzbelegungsschalter nach Anspruch 3, **dadurch gekennzeichnet, dass** bei durchgedrückter Federscheibe und durchgeschalteter elektrischer Schaltvorrichtung die Anschlagflächen von Gehäuseoberteil und Gehäuseunterteil aneinander anliegen.

5. Sitzbelegungsschalter nach Anspruch 3 oder 4, **dadurch gekennzeichnet, dass** das Gehäuse wenigstens zwei Anschlagflächen aufweist, wobei die Anschlagflächen an Halteeinrichtungen für den Schaltungsträger vorgesehen sind.

6. Sitzbelegungsschalter nach einem der vorstehenden Ansprüche, **dadurch gekennzeichnet, dass** der Sitzbelegungsschalter ausgebildet ist, an einem Schaumelement des Fahrzeugsitzes befestigt zu werden.

7. Sitzbelegungsschalter nach einem der vorstehenden Ansprüche, **dadurch gekennzeichnet, dass** das Gehäuse ausgebildet ist, an einer Sitzwanne eines Fahrzeugsitzes befestigt zu werden.

8. Sitzbelegungsschalter nach einem der vorstehenden Ansprüche, **dadurch gekennzeichnet, dass** das Gehäuse ausgebildet ist, an einer Unterfederung eines Fahrzeugsitzes befestigt zu werden.

9. Sitzbelegungsschalter nach einem der vorstehenden Ansprüche, **dadurch gekennzeichnet, dass** das Gehäuse einstückig mit einem Gehäuseunterteil und einem Gehäuseoberteil ausgebildet ist, die zueinander klappbar ausgebildet ist.

10. Sitzbelegungsschalter nach einem der vorstehenden Ansprüche, **dadurch gekennzeichnet, dass** das Gehäuse balkenartig ausgebildet ist und im Bereich der beiden Enden des Gehäuses jeweils ein Betätigungselement sowie eine elektrische Schaltvorrichtung mit Schaltungsträger und Federscheibe angeordnet ist.

11. Sitzbelegungsschalter nach Anspruch 10, **dadurch gekennzeichnet, dass** zwischen den beiden Enden des balkenartigen Gehäuses ein Vorsprung abragt, der an seinem freien Ende einen Steckverbinder zum Anschließen von Kabeln aufweist.

12. Fahrzeugsitz mit wenigstens einem Sitzbelegungsschalter nach einem der vorstehenden Ansprüche **dadurch gekennzeichnet, dass** der Sitzbelegungsschalter an einem Schaumelement des Fahrzeugsitzes befestigt ist.

13. Fahrzeugsitz mit wenigstens einem Sitzbelegungsschalter nach einem der vorstehenden Ansprüche, **dadurch gekennzeichnet, dass** der wenigstens eine Sitzbelegungsschalter gegenüber einem Schaumelement des Fahrzeugsitzes vorgesehen ist, wobei das Schaumelement gegenüber dem Betätigungselement des Sitzbelegungsschalters mit einer Gleitfläche versehen ist.

14. Fahrzeugsitz mit einem Sitzbelegungsschalter nach einem der vorstehenden Ansprüche, **dadurch gekennzeichnet, dass** der wenigstens eine Sitzbelegungsschalter an einer Unterfederung des Fahrzeugsitzes befestigt ist.

15. Fahrzeugsitz nach Anspruch 14, **dadurch gekennzeichnet, dass** der Sitzbelegungsschalter an einem Verbindungselement für Federdrähte der Unterfederung angeordnet ist.

16. Fahrzeugsitz nach Anspruch 15, **dadurch gekennzeichnet, dass** das wenigstens eine Verbindungselement für die Federdrähte mit einer Aufnahme für das Gehäuse des Sitzbelegungsschalters versehen ist.

17. Fahrzeugsitz mit einem Sitzbelegungsschalter nach einem der vorstehenden Ansprüche, **dadurch gekennzeichnet, dass** der Sitzbelegungsschalter an einer Sitzwanne des Fahrzeugsitzes vorgesehen ist.
